# EUROPÄISCHE PATENTSCHRIFT

(11) **EP 0 515 837 B1**
(45) Veröffentlichungstag und Bekanntmachung des Hinweises auf die Patenterteilung: **20.07.1994**
(21) Anmeldenummer: 92106997.7
(22) Anmeldetag: 24.04.1992
(51) Int. Cl.: B60K 11/08, F41H 5/013, F41H 7/02

(54) **Grätingsystem**
Grid system
Système de grille

(30) Priorität: 25.05.1991 DE 4117194
(43) Veröffentlichungstag der Anmeldung: 02.12.1992
(73) Patentinhaber: Fried. Krupp AG Hoesch-Krupp, 44145 Dortmund (DE)
(72) Erfinder: Reinehr, Paul-Werner, W-5860 Iserlohn-Rheinen (DE); Dieterich, Günter, W-4600 Dortmund 41 (DE); Schulte, Hans-Werner, W-5840 Schwerte 3 (DE); Piel, Karlheinz, Dipl.-Ing., W-5840 Schwerte 3 (DE); Fenger, Dirk, W-4780 Lippstadt 8 (DE)

(56) Entgegenhaltungen:
- DE-B- 1 285 345
- FR-A- 888 358
- US-A- 4 325 283

## Beschreibung

### Grätingsystem

Die Erfindung betrifft ein Grätingsystem nach dem Oberbegriff des Anspruches 1.

Grätingsysteme für Sonderfahrzeuge sind z. B. aus den DE-OS′en 37 03 716, 40 28 124 und 40 15 304 bekannt. Bei diesen bekannten Grätingsystemen wird eine Verbesserung der Beschuß- und Schlagsicherheit durch Erhöhung des Materialvolumens und/oder durch Kombination verschiedener Materialien/Stoffe und/oder durch spezielle Formgebung und Anordnung bzw. Befestigung der einzelnen Profilleisten im Rahmen des Grätingsystems erreicht.

Außerdem ist auch aus der US-A-43 25 283 ein Grätingsystem mit parallel zueinander in einem Rahmen angeordneten Profilleisten für gepanzerte Sonderfahrzeuge und/oder stationäre Einheiten bekannt, wobei die Profilleisten starr an der zu schützenden Einheit befestigt sind, so daß wegen des starren Abstützens der Profilleisten an einem festen Rahmen die kinetische Energie auftreffender Teile nicht optimal absorbiert wird.

Von daher ist es Aufgabe der vorliegenden Erfindung, die Beschuß- und Schlagsicherheit der bekannten Grätingsysteme weiter zu optimieren.

Nach der Erfindung wird die Aufgabe durch die im kennzeichnenden Teil des Anspruchs 1 angegebenen Merkmale gelöst.

Zweckmäßige und vorteilhafte Ausführungsformen sind in den Ansprüchen 2 bis 7 angegeben.

Die Verbindung der dem Beschuß bzw. Beschlag ausgesetzten Seite des Grätingsystems mit den Energieabsorben kann dabei lösbar oder unlösbar ausgelegt sein.

Die unlösbare Verbindung kann hierbei erfolgen als Schweißverbindung, Lötverbindung, Klebverbindung oder sonstige mechanisch unlösbare Verbindung. Die lösbare Verbindung kann erfolgen als Steckverbindung mit und ohne Versplintung, Schraubverbindung oder sonstige mechanisch lösbare Verbindung.

Als Energieabsorber können alle herkömmlichen Federn und Schwingungsdämpfer verwendet werden wie Tellerfedern, Schrauben für Druck- und/oder Zugbelastung, Druckfedern mit runden, quadratischen, flachrunden oder profiliertem Querschnitt, Gummifedern, Balgenfedern, Kunststoffedern, federnde Druckstücke (Werkstoffe: metallisch/nichtmetallisch, organisch/anorganisch), Dämpfungsplatten, Drahtseil-Federelemente, Kautschuk/kautschukartige Stoffe, Schwingungsmetalle, ausgelegt als Puffer in Gummi-/Metall-Verbindungen, hydraulische und Gasdruck-Energieabsorber oder sonstige Energieabsorber.

Die Verbesserung, die mit der vorliegenden Erfindung erreicht wird, basiert somit auf der Möglichkeit, beim Auftreffen eines Fremdkörpers auf die Gräting einen Teil der zur Durchdringung der Gräting notwendigen kinetischen Energie durch die Energieabsorber zu eliminieren und somit einen größeren ballistischen Schutz bei gleichem oder geringerem Gewicht zu erreichen.

Anhand der schematischen Zeichnung sind Ausführungsbeispiele des erfindungsgemäßen Grätingsystems im folgenden näher erläutert:

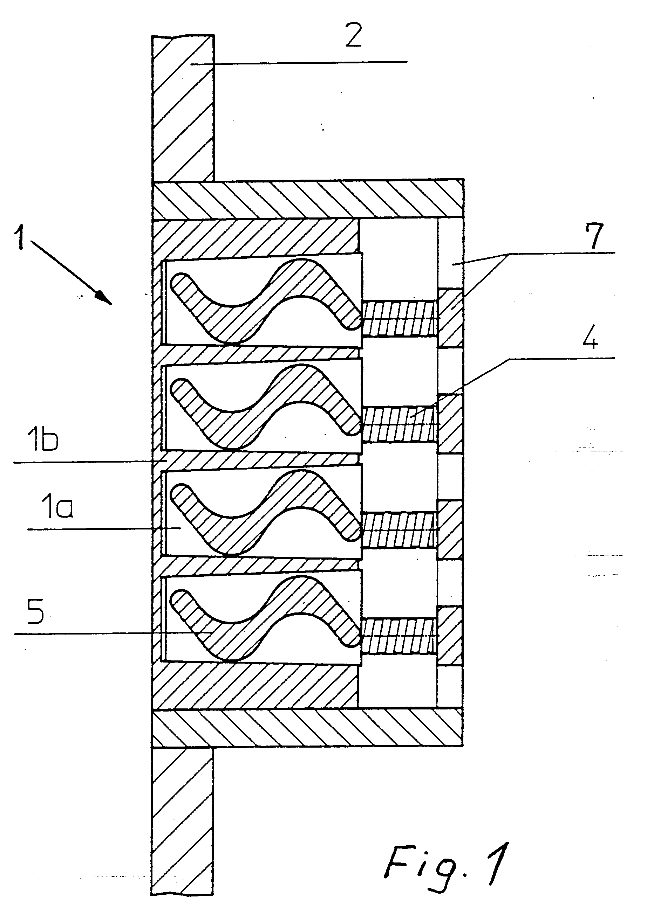

Es zeigt
Fig. 1 ein Grätingsystem im Querschnitt

Wie aus der Fig. 1 hervorgeht, sind Energieabsorber 4 direkt für jede Profilleiste 5 eingebracht. Der Grätingrahmen zur Aufnahme der Profilleisten 5 ist hierbei unterteilt in einen starren Rahmen 1 b, in dem einzelne Rahmenteile 1 a mit je einer Profilleiste 5 beweglich angeordnet sind. Dieser bewegliche Rahmenteil 1 a ist jeweils über einen Energieabsorber 4 gegen den starren Rahmen 1 b und eine Federarretierung 7 abgestützt. Die einzelnen Profilleisten 5 können sich bei Schlag/Beschuß jeweils mit dem beweglichen Rahmenteil 1 a entsprechend gegen den Energieabsorber 4 bewegen und so einen Teil der kinetischen Energie absorbieren. Dieses komplette Grätingsystem 1 ist an der Wand 2 des nicht dargestellten Sonderfahrzeuges befestigt.

## Patentansprüche

1. Grätingsystem mit parallel zueinander in einem Rahmen angeordneten Profilleisten für gepanzerte Sonderfahrzeuge und/oder gepanzerte stationäre Einheiten, dadurch gekennzeichnet, daß zwischen dem Grätingsystem (1) und dem dieses aufnehmende Sonderfahrzeug bzw. der gepanzerten stationären Einheit Energieabsorber (4) angeordnet sind, die im Rahmen (1a,1b) des Grätingsystems (1) zwischen den einzelnen Profilleisten (5) und einer an einem starren Rahmenteil abgestützten Federarretierung angeordnet sind.

2. Grätingsystem nach Anspruch 1, dadurch gekennzeichnet, daß die Energieabsorber (4) aus Federelementen bestehen.

3. Grätingsystem nach Anspruch 1, dadurch gekennzeichnet, daß die Energieabsorber (4) aus Gasdruckelementen bestehen.

4. Grätingsystem nach Anspruch 1, dadurch gekennzeichnet, daß die Energieabsorber (4) aus Hydraulikelementen bestehen.

5. Grätingsystem nach Anspruch 1, dadurch gekennzeichnet, daß die Energieabsorber (4) aus Schwingungsmetallelementen bestehen.

6. Grätingsystem nach einem oder mehreren der Ansprüche 1 bis 5, dadurch gekennzeichnet, daß das Grätingsystem (1) mit den Energieabsorbern (4) lösbar verbunden ist.

7. Grätingsystem nach einem oder mehreren der Ansprüche 1 bis 5, dadurch gekennzeichnet, daß das Grätingsystem (1) mit den Energieabsorbern (4) unlösbar verbunden ist.

## Claims

1. Grating system having profile strips, which are arranged parallel to each other in a frame, for armoured special-purpose vehicles and/or stationary units, characterised in that energy absorbers (4) are arranged between the grating system (1) and the special-purpose vehicle and/or the armoured stationary unit receiving this grating system (1), which energy absorbers are disposed in the frame (1a, 1b) of the grating system (1) between the individual profile strips (5) and a resilient fixing device supported at a rigid frame part.

2. Grating system according to claim 1, characterised in that the energy absorbers (4) comprise resilient elements.

3. Grating system according to claim 1, characterised in that the energy absorbers (4) comprise gas-pressure elements.

4. Grating system according to claim 1, characterised in that the energy absorbers (4) comprise hydraulic elements.

5. Grating system according to claim 1, characterised in that the energy absorbers (4) comprise vibrating metal elements.

6. Grating system according to one or more of claims 1 to 5, characterised in that the grating system (1) is releasably connected to the energy absorbers (4).

7. Grating system according to one or more of claims 1 to 5, characterised in that the grating system (1) is non-releasably connected to the energy absorbers (4).

## Revendications

1. Système de grille, avec languettes profilées disposées parallèlement les unes aux autres dans un cadre, pour véhicules spéciaux et/ou unités fixes blindés, caractérisé en ce que des absorbeurs d'énergie (4) sont disposés entre le système de grille (1) et le véhicule spécial ou l'unité fixe blindée recevant ce système de grille (1), qui sont disposés dans le cadre (1a, 1b) du système de grille (1) entre les languettes profilées individuelles (5) et un dispositif d'arrêt à ressort s'appuyant sur une partie rigide du cadre.

2. Système de grille selon la revendication 1, caractérisé en ce que les absorbeurs d'énergie (4) consistent en éléments à ressort.

3. Système de grille selon la revendication 1, caractérisé en ce que les absorbeurs d'énergie (4) consistent en éléments à pression de gaz.

4. Système de grille selon la revendication 1, caractérisé en ce que les absorbeurs d'énergie (4) consistent en éléments hydrauliques.

5. Système de grille selon la revendication 1, caractérisé en ce que les absorbeurs d'énergie (4) consistent en éléments métalliques oscillants.

6. Système de grille selon une ou plusieurs des revendications 1 à 5, caractérisé en ce que le système de grille (1) est relié de manière amovible aux absorbeurs d'énergie (4).

7. Système de grille selon une ou plusieurs des revendications 1 à 5, caractérisé en ce que le système de grille (1) est relié de manière non amovible aux absorbeurs d'énergie (4).
